# EUROPEAN PATENT APPLICATION

(11) **EP 0 622 189 A1**
(43) Date of publication of application: **02.11.1994**
(21) Application number: 94105299.5
(22) Date of filing: 06.04.1994
(51) Int. Cl.: B32B 31/00, B29C 69/00, B29D 9/00, B29C 63/02

(54) **Method to produce outwardly lined furniture elements with a foamed, semi-foamed or synthetic filler core, and outwardly lined elements produced with such method**

(30) Priority: 30.04.1993 IT UD930073
(71) Applicant: ILCAM SpA, I-33044 Manzano (UD) (IT)
(72) Inventor: Bas, Ivo, I-31015 Conegliano (IT)
(74) Representative: Petraz, Gilberto Luigi

(57) **Abstract**

Method to produce outwardly lined furniture elements with a foamed, semi-foamed or synthetic filler core, the elements consisting of an inner filler core (17) outwardly lined with a decorative material (18), such elements being employed to construct parts of furniture, the method comprising a step of production (15) by injection moulding or casting of a flat sheet (12) of a foamed, semi-foamed or synthetic material of great dimensions, the flat sheet (12) of a foamed, semi-foamed or synthetic material undergoing shearing and shaping (14) to produce furniture elements of the desired size, which thereafter undergo squaring and trimming (16) to produce an inner filler core (17), which is lined with a decorative material (18) after application of a layer of an adhesive of a polyurethane type.

Decorated element for furniture, which comprises an inner filler core (17) consisting of a foamed, semi-foamed or synthetic material produced by shearing from a flat sheet (12) of a foamed, semi-foamed or synthetic material with a density between 15 and 30 kgs. per cu.metre.

## Description

This invention concerns a method to produce outwardly lined furniture elements with a foamed, semi-foamed or synthetic filler core and the outwardly lined furniture elements with a foamed, semi-foamed or synthetic filler core thus produced, as set forth in the respective main claims.

To be more exact, the invention concerns a method to produce furniture elements the filler core of which consists of a suitably shaped foamed, semi-foamed or synthetic material outwardly lined with one or more sheets of a decorative lining material consisting of a plastic, wooden, paper or PVC material or a laminate or thin foil of wood or the like.

The invention is applied to the furniture industry and especially to the production of lined furniture elements with a foamed, semi-foamed or synthetic filler core, the elements having their front surface smooth or shaped with mouldings, cornices, ornaments, etc.

The lined furniture elements made with a foamed, semi-foamed or synthetic filler core by means of the method according to the invention can be employed to produce sidewalls, work surfaces or doors of furniture.

Shaped and lined furniture elements consisting of a shaped body made generally of a wooden agglomerate material and lined with one or more decorative sheets of a plastic or other material are contained in the state of the art.

These shaped and lined furniture elements have been widely used although they entail several drawbacks including the great weight of their shaped, inner, filler core consisting of a wooden agglomerate material and the tendency of the inner filler core, when in contact with water, to swell and become damaged to the extent that the element cannot be used.

Next, the great weight of the inner filler core made of a wooden agglomerate material leads to high production costs linked to the handling of the material in the factory and to the transport of the assembled furniture.

In fact, the vehicles used for haulage of the furniture by road can often not be fully filled since they would exceed their maximum authorized load, and this fact increases the costs of the furniture.

Moreover, the plant and machine tools required for the processing of the inner filler cores made of a wooden agglomerate material are expensive inasmuch as the processing of the filler cores requires strong machines and tools, and these costs too have a great effect on the finished product.

Furthermore, the inner filler core of a wooden agglomerate material often contains adhesive substances, such as formaldehyde for instance, which give off volatile toxic substances into the environment.

Besides, the furniture elements with a filler core of a wooden agglomerate material, when burning, generally produce toxic and harmful gases and fumes, which may cause damage to persons in the event of fires.

So as to obviate the above problems, furniture elements have been disclosed which employ a foamed material consisting, for instance, of foamed polyurethane produced by moulding.

Filler cores consisting of foamed material have the advantage of being very light and water-repellent and of not producing toxic fumes in the event of fires.

On the other hand, the furniture elements consisting of a foamed material are produced at present by the injection moulding of one or more furniture elements at a time, and their production costs are therefore very high.

Next, the furniture elements made of a foamed or expanded material are normally finished or decorated by lacquering.

It should be born in mind, however, that as the furniture elements may have shapes and, above all, dimensions that differ a great deal, each type of furniture element consisting of a foamed material requires a mould costing a great deal, and these costs have a great effect on the furniture production cost.

For this reason the furniture elements made by foaming have been unable so far to replace the use of furniture elements consisting of wooden agglomerate material notwithstanding all the above drawbacks which the furniture elements of a wooden agglomerate material entail.

The present applicants have studied, tested and obtained this invention so as to overcome the shortcomings of the state of the art and to achieve further advantages.

This invention is set forth and characterised in the respective main claims, while the dependent claims describe variants of the idea of the main solution.

The purpose of this invention is to provide a method to produce lined furniture elements with a filler core of a foamed, semi-foamed or synthetic material for use as doors for furniture, work surfaces, sidewalls, etc. in the construction of furniture.

This foamed, semi-foamed or synthetic material possesses the special feature of being very light and not swelling when in contact with water.

The method according to the invention consists in producing sheets of foamed, semi-foamed or synthetic material with very flat surfaces and of great sizes; the sheets are then sheared to size and worked in the same way as the inner filler cores consisting of a wooden agglomerate material.

The present applicants have found that it is very important that these sheets of a foamed, semi-foamed or synthetic material should have their surfaces parallel, very flat and substantially free of surface tensions so that the sheets, when sheared and processed,do not bend and lead to deformed filler cores which cannot be used.

According to a variant the polyurethane resins employed to produce the flat sheet of foamed, semi-foamed or synthetic material may be of a type which does not generate thick toxic fumes when it burns.

For safety reasons and to prevent fires, the flat sheets of foamed, semi-foamed or synthetic material may be made with self-extinguishing polyurethane resins which melt without burning.

In a first arrangement of the method according to the invention the sheet of foamed, semi-foamed or synthetic material, when produced, is sheared and shaped to form inner filler cores which possess the required measurements, dimensions and conformations.

Lastly, these inner filler cores consisting of foamed, semi-foamed or synthetic material are outwardly lined with a decorative lining after application of an adhesive, of a polyurethane type for instance, which is advantageously, but not necessarily, of a quick-setting type.

The decorative lining may be paper, wood, a plastic, or a laminate or very thin foil of wood, or any other decorative material on the market.

In a second preferred arrangement of the invention a decorative lining is fitted to the sheet of foamed, semi-foamed or synthetic material after application of an adhesive, of a polyurethane type for instance, which is advantageously, but not necessarily of a quick-setting type.

The sheet of foamed, semi-foamed or synthetic material lined with the decorative lining is then sheared and shaped according to the dimensions and form required.

The lined furniture element, now shaped and sheared to size and produced either with the first method or the second method, then undergoes a squaring and trimming operation so as to obtain a lined furniture element according to the invention.

The method according to the invention requires investments appreciably smaller than those needed for plants which employ the methods of the state of the art inasmuch as the flat sheet of foamed, semi-foamed or synthetic material of big dimensions can be produced by casting or injection moulding, and one single type of mould is enough to produce it.

From this flat sheet of big dimensions it is then possible to obtain at a low cost, by means of the normal processes used for filler cores consisting of a wooden agglomerate material, the filler cores consisting of a foamed, semi-foamed or synthetic material and possessing the required dimensions and shape.

The use of filler cores which consist of foamed, semi-foamed or synthetic material and weigh considerably less than the filler cores consisting of a wooden agglomerate material enables the production plant and the machine tools to be considerably simplified.

In fact, the means to convey and transfer the filler cores consisting of a foamed, semi-foamed or synthetic material and the lined furniture elements thus produced can be very simple owing to the modest weight of the filler cores to be handled.

Moreover, the costs for transporting the lined furniture elements with the foamed, semi-foamed or synthetic filler core and the furniture made therewith are much lower since their modest weight enables the haulage vehicles to be fully filled without exceeding the maximum authorised load.

Furthermore, the means to perform the shearing, shaping, squaring and trimming are very simple inasmuch as the steps to shear the sheet of foamed, semi-foamed or synthetic material are not difficult and enable shearing tools to be used which are much less strong and much less expensive than those employed to process filler cores consisting of a wooden agglomerate material.

Besides, the tools suffer a very limited wear since the filler sheet consisting of a foamed, semi-foamed or synthetic material has a much lower shearing strength.

Moreover, the noise caused by all these processings is much less than that caused by the processing of filler cores consisting of a wooden agglomerate material.

Furthermore, the handling means and tools require an installed power appreciably smaller than that installed in plants which process filler cores consisting of a wooden agglomerate material, and this fact makes possible a great saving of energy in the production of lined furniture elements according to the invention. The smaller resistance provided by a sheet of foamed, semi-foamed or synthetic material to the tools enables the processing speed to be increased and therefore the cycle times to be reduced and the output of the production plant to be increased.

The filler core made of a foamed, semi-foamed or synthetic material, when lined, possesses a mechanical strength such as to ensure a sufficient anchorage, according to its density, for the screws used to fit the hinges and to assemble the furniture elements.

The lined furniture element comprising a foamed, semi-foamed or synthetic filler core and produced with the method according to the invention can be employed without problems to replace the furniture elements including a filler core of a wooden agglomerate material in the fabrication of furniture, thereby producing equally fine and strong furniture of a much lower weight.

The attached figures are given as a non-restrictive example and show a preferred arrangement of the invention as follows:
- Fig.1: is a block diagram of the method according to the invention;
- Fig.2: shows a section of a lined furniture element with a foamed, semi-foamed or synthetic material according to the invention;
- Fig.3: is a plan view of a flat sheet of foamed, semi-foamed or synthetic material before being sheared.

The reference number 10 in the attached figures denotes generally a method to produce outwardly lined furniture elements 11 with an inner filler core 17 consisting of a foamed, semi-foamed or synthetic material according to the invention.

The inner filler core 17 consisting of a foamed, semi-foamed or synthetic material according to the invention consists advantageously, but not necessarily, of low-density foamed polyurethane with a density between 15 and 30 kgs. per cu. metre, or of another analogous synthetic material.

According to a variant, the foamed, semi-foamed or synthetic material is of a self-extinguishing type and melts without generating toxic and harmful fumes.

According to another variant, the foamed, semi-foamed or synthetic material, when burning, generates substantially transparent fumes which are neither toxic nor harmful.

The method 10 according to the invention includes a step 15 of production of flat sheets 12 of a foamed, semi-foamed or synthetic material of great sizes, which are produced by injection moulding according to the state of the art.

These flat sheets 12 of a foamed, semi-foamed or synthetic material of great sizes undergo thereafter a series of processings of the same type as those employed to process the inner filler cores consisting of a wooden agglomerate material.

According to a first arrangement of the invention the flat sheets 12 undergo a shearing and shaping step 14 to produce a filler core 17 sheared to size.

The filler cores 17 sheared to size then undergo a finishing step, in which they are outwardly lined with one or more sheets 18 of a decorative material, a plastic material in this case.

Alternatively, the decorative material 18 may consist of a wooden or paper material, PVC, a laminate or very thin foil of wood or another analogous material.

The sheet 18 of a decorative material is advantageously fitted by means of an adhesive 19 to the filler core 17 by applying a layer of adhesive of a polyurethane type, which is advantageously, but not necessarily, a quick-setting type.

The lined element thus produced then undergoes a squaring and trimming operation 16 to provide a lined furniture element 11 with a filler core consisting of a foamed, semi-foamed or synthetic material according to the invention.

According to a second arrangement of the invention the decorative lining 18 is applied with an adhesive 19 to the flat sheet 12 of foamed, semi-foamed or synthetic material so as to produce a flat sheet 13 consisting of a lined foamed, semi-foamed or synthetic material.

The lined flat sheet 13 undergoes thereafter a shearing and shaping operation 14 to provide the lined furniture elements according to the invention.

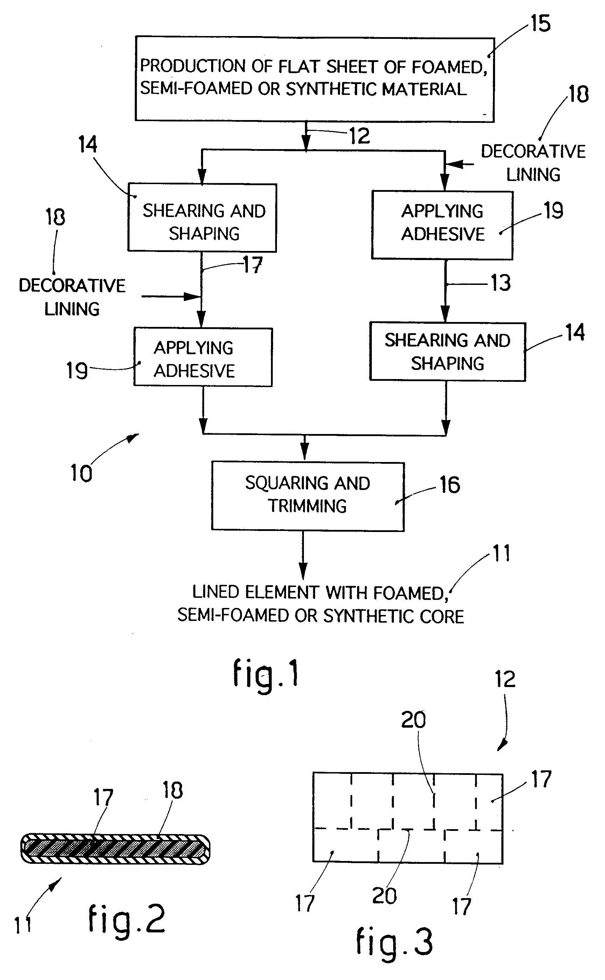

Fig.3 shows one of the flat sheets 12 of foamed, semi-foamed or synthetic material on which are shown with lines of dashes the shearing lines 20 to obtain a plurality of inner filler cores 17 sheared to size.

The method 10 according to the invention enables lined furniture elements 11 to be produced with an inner filler core 17 consisting of a foamed, semi-foamed or synthetic material at a reduced cost inasmuch as it is enough to have one mould alone to produce flat sheets 12 of great sizes.

## Claims

1. Method to produce outwardly lined furniture elements with a foamed, semi-foamed or synthetic filler core, the elements consisting of an inner filler core (17) outwardly lined with a decorative material (18), such elements being employed to construct parts of furniture, the method being characterised in that it comprises a step of production (15) by injection moulding or casting of a flat sheet (12) of a foamed, semi-foamed or synthetic material of great dimensions, the flat sheet (12) of a foamed, semi-foamed or synthetic material undergoing shearing and shaping (14) to produce furniture elements of the desired size, which thereafter undergo squaring and trimming (16) to produce an inner filler core (17), which is lined with a decorative material (18) after application of a layer of an adhesive of a polyurethane type.

2. Method as in Claim 1, in which the step (19) of applying by means of an adhesive the decorative lining (18) is carried out on the flat sheet (12) of a foamed, semi-foamed or synthetic material upstream of the shearing and shaping step (14).

3. Method as in Claim 1, in which the step (19) of applying by means of an adhesive the decorative lining (18) is carried out on the inner filler core (17) leaving the shearing and shaping step (14).

4. Decorated element for furniture, which is characterised in that it comprises an inner filler core (17) consisting of a foamed, semi-foamed or synthetic material and produced by shearing from a flat sheet (12) of a foamed, semi-foamed or synthetic material with a density between 15 and 30 kgs. per cu.metre.

5. Furniture element as in Claim 4, in which the decorative material (18) consists of a plastic sheet.

6. Furniture element as in Claim 4, in which the decorative material (18) consists of paper.

7. Furniture element as in Claim 4, in which the decorative material (18) consists of PVC.

8. Furniture element as in Claim 4, in which the decorative material (18) consists of a plastic laminate.

9. Furniture element as in Claim 4, in which the decorative material (18) consists of a very thin foil of wood.
